# EUROPEAN PATENT APPLICATION

(11) **EP 4 550 034 A1**
(43) Date of publication of application: **07.05.2025**
(21) Application number: 23851622.3
(22) Date of filing: 31.07.2023
(51) Int. Cl.: G02C 11/00, G02C 5/14, H04R 9/06, H04R 9/02

(54) **TEMPLE AND WEARABLE SMART DEVICE**

(30) Priority: 10.08.2022 CN 202210956766
(71) Applicant: Huawei Technologies Co., Ltd., Shenzhen, Guangdong 518129 (CN)
(72) Inventor: CHEN, Jiayi, Shenzhen, Guangdong 518129 (CN); TAO, Jingya, Shenzhen, Guangdong 518129 (CN); QIN, Renxuan, Shenzhen, Guangdong 518129 (CN); GUO, Li, Shenzhen, Guangdong 518129 (CN)
(74) Representative: Thun, Clemens
(86) International application number: PCT/CN2023/110086
(87) International publication number: WO 2024/032401

(57) **Abstract**

This application provides a temple and a smart wearable device. The temple includes: a body; and a sound production apparatus that is installed on the body. The sound production apparatus includes a moving coil assembly and a bone conduction assembly that are configured for sound production. The temple includes the moving coil assembly and the bone conduction assembly, and is different from a temple that includes only the moving coil assembly in that sound leakage can be reduced, sound quality is improved, and audio listening effect is improved. **In** addition, the temple in embodiments of this application is different from a temple that includes only the bone conduction assembly in that a vibration sense can be reduced, to improve wearing experience of a user and improve sound quality. Therefore, according to the temple in embodiments of this application, sound quality of a bone conduction sound production apparatus can be improved when sound leakage is reduced, the audio listening effect is improved, and the vibration sense during wearing by the user is reduced, to improve wearing comfort.

## Description

This application claims priority to Chinese Patent Application No. 202210956766.1, filed with the China National Intellectual Property Administration on August 10, 2022 and entitled "TEMPLE AND SMART WEARABLE DEVICE", which is incorporated herein by reference in its entirety.

### TECHNICAL FIELD

This application relates to the field of terminal device technologies, and in particular, to a wireless data terminal.

### BACKGROUND

Glasses are one of common products in people's daily life and work. Different types of glasses, such as myopia glasses, hyperopia glasses, presbyopia glasses, and sunglasses, play different roles and can provide convenience for people's life and work. Smart glasses launched in recent years have other functions. For example, some smart glasses have built-in speakers, so that the smart glasses can be used for audio listening and a call. Currently, a principle of speakers of commonly used smart glasses is that a sound wave is generated by using a diaphragm, and the sound wave is propagated in air, to enter an ear of a user. However, because the sound wave is propagated in the air, the smart glasses have serious sound leakage.

### SUMMARY

This application provides a temple and a smart wearable device. A sound production apparatus of the temple has a small amount of sound leakage, good sound quality, and good wearing comfort.

A first aspect of an embodiment of this application provides a temple. The temple includes: a body; and a sound production apparatus that is installed on the body. The sound production apparatus includes a moving coil assembly and a bone conduction assembly that are configured for sound production.

In this embodiment of this application, the temple includes the moving coil assembly and the bone conduction assembly, and is different from a temple that includes only the moving coil assembly in that sound leakage can be reduced, sound quality is improved, and audio listening effect is improved. In addition, the temple in this embodiment of this application is different from a temple that includes only the bone conduction assembly in that a vibration sense can be reduced, to improve wearing experience of a user and improve sound quality. Therefore, according to the temple in this embodiment of this application, sound quality of a bone conduction sound production apparatus can be improved when sound leakage is reduced, audio listening effect is improved, and a vibration sense during wearing by the user is reduced, to improve wearing comfort.

In a specific embodiment, when the temple is in a first operating mode, the moving coil assembly is configured to emit a low-frequency sound wave, and the bone conduction assembly is configured to emit a high-frequency sound wave. In this embodiment, in the first operating mode (a quiet environment), when the bone conduction assembly emits the high-frequency sound wave, the moving coil assembly emits the low-frequency sound wave, so that sound leakage of the high-frequency sound wave can be effectively reduced. Sound leakage of the low-frequency sound wave is not likely to be heard by the outside. Therefore, sound leakage corresponding to a case in which the moving coil assembly emits the low-frequency sound wave is not obvious. In addition, the case in which both the moving coil assembly and the bone conduction assembly produce sounds is different from a case in which the bone conduction assembly produces all sounds in that a vibration sense during wearing by the user can be reduced, and wearing comfort is improved.

In a specific embodiment, when the temple is in a second operating mode, the moving coil assembly is configured to emit a high-frequency sound wave and a low-frequency sound wave, and the bone conduction assembly is configured to emit a high-frequency sound wave and a low-frequency sound wave. The second operating mode may be a mode used by the temple in a noisy environment. In the noisy environment, sound leakage is not obvious. Therefore, whether the sound production apparatus leaks a sound is no longer important, provided that it can be ensured that the sound production apparatus has good sound quality and wearing comfort of the user is good. In this case, the moving coil assembly and the bone conduction assembly produce sounds in a full frequency band. In other words, both the moving coil assembly and the bone conduction assembly are always in an operating state. This case is different from a case in which only the moving coil assembly operates in that sound quality of the sound production apparatus can be improved in the full frequency band, and is different from a case in which only the bone conduction assembly operates in that wearing comfort of the user can be improved. According to the sound production apparatus in this embodiment of this application, sound quality of the sound production apparatus of the temple and wearing comfort of the temple can be improved through a cooperative operation of the moving coil assembly and the bone conduction assembly.

In a specific embodiment, the temple further includes a control apparatus, and the control apparatus is configured to control operating statuses of the moving coil assembly and the bone conduction assembly. The control apparatus can adjust the operating statuses of the bone conduction assembly and the moving coil assembly based on an operating environment in which the temple is located, so that the sound production apparatus can adapt to different environments.

In a specific embodiment, the control apparatus includes a first control component and a second control component, the first control component is configured to control the operating status of the moving coil assembly, and the second control component is configured to control the operating status of the bone conduction assembly. In this embodiment, when the first control component and the second control component respectively control the moving coil assembly and the bone conduction assembly, control sensitivity and accuracy can be improved.

In a specific embodiment, the temple includes an operation portion, at least a part of the operation portion is exposed on an outer side of the body, and the operation portion is used by the user to control the operating statuses of the moving coil assembly and the bone conduction assembly by using the control apparatus. The operation portion may be a button or a touch key. The operation portion is pressed or touched, so that the operating statuses of the moving coil assembly and the bone conduction assembly can be controlled by using the control apparatus. In this way, the user can switch the operating statuses of the moving coil assembly and the bone conduction assembly based on an environment in which the user is located, so that sound quality of the sound production apparatus of the temple is good in a corresponding environment, and wearing comfort is good.

In a specific embodiment, the temple includes an installation cavity, and the moving coil assembly is installed in the installation cavity; and the body is provided with a sound outlet hole communicating with the installation cavity, and the sound outlet hole is located on a lower surface of the body. In this embodiment, when the moving coil assembly is located in the installation cavity, the installation cavity can protect the moving coil assembly. This improves a service life and reliability of the moving coil assembly. In addition, air vibration corresponding to a case in which the moving coil assembly operates forms a sound wave in a housing, and the sound outlet hole can lead the sound wave in the housing to the outside of the temple, so that the user can hear the sound wave. When the sound outlet hole is located on the lower surface of the body, the sound outlet hole faces and is close to an ear of the user, so that the user can still hear a clear sound when volume is low.

In a specific embodiment, the temple further includes a cover plate detachably connected to the body, and the cover plate and the body enclose the installation cavity, so that the moving coil assembly can be conveniently installed in the installation cavity.

In a specific embodiment, the bone conduction assembly includes a piezoelectric sheet installed on the body. An operating principle of the piezoelectric sheet is to convert an audio electrical signal into a mechanical vibration signal. Specifically, the audio electrical signal may be input into a voice coil through electromagnetic action, and the voice coil may be placed in a magnetic field to drive vibration of the voice coil. Alternatively, a transducer apparatus may be made by using a principle of piezoelectric ceramics, to convert an electrical signal into a shape change of a ceramic component to generate vibration. The mechanical vibration signal generated by the piezoelectric sheet can be conducted to a cochlea of the user through biological tissue and a bone of the user, so that the user hears a sound. Bone conduction is different from a sound conduction manner in which a sound wave is generated by using a diaphragm in that many steps of sound wave propagation are omitted, and clear sound reproduction can be implemented in a noisy environment. In addition, less sound wave energy is dissipated in the air. This reduces sound leakage, and improves privacy of a call and audio listening.

In a specific embodiment, the bone conduction assembly further includes a skin-friendly layer configured to be in contact with a human body, and the skin-friendly layer covers an outer side of the piezoelectric sheet. When the temple is in a worn state, the piezoelectric sheet of the bone conduction assembly is in contact with soft tissue on the ear of the user through the skin-friendly layer, so that wearing comfort of the user can be improved, and user discomfort caused by vibration of the piezoelectric sheet can be reduced. In addition, the skin-friendly layer can further protect the piezoelectric sheet, to improve reliability and a service life of the piezoelectric sheet.

In a specific embodiment, a material of the skin-friendly layer is one or more of polyurethane, thermoplastic polyurethane, rubber, silica gel, polyethylene terephthalate, and polyetherimide.

In a specific embodiment, the piezoelectric sheet is elastically connected to the body by using an elastic member, so that vibration of the piezoelectric sheet transmitted to the body can be reduced, wearing comfort is improved, and the piezoelectric sheet and the body are protected. This reduces impact of vibration on the piezoelectric sheet and the body.

In a specific embodiment, a material of the elastic member is one or more of polyurethane, thermoplastic polyurethane, rubber, silica gel, polyethylene terephthalate, and polyetherimide.

In a specific embodiment, the body includes a first segment and a second segment bent relative to the first segment, the bone conduction assembly is disposed on the first segment, and the bone conduction assembly is attached to soft tissue on an ear of a human body. When the temple is in the worn state, the piezoelectric sheet of the bone conduction assembly is located at the soft tissue on the ear of the human body. A case in which mechanical vibration of the piezoelectric sheet is conducted to an auricular cartilage through the soft tissue on the ear in this embodiment of this application is different from a case in which the bone conduction assembly is located behind the ear (a transmission path is that the mechanical vibration is transmitted to a bone after passing through a skin and subcutaneous soft tissue) in that sound quality is good, and sound leakage can be further reduced.

A second aspect of an embodiment of this application provides a smart wearable device. The smart wearable device includes: a rim; and a temple, where the temple is the foregoing temple, and the temple is installed on the rim.

It should be understood that the foregoing general descriptions and the following detailed descriptions are merely used as examples, and cannot limit this application.

### BRIEF DESCRIPTION OF DRAWINGS

FIG. 1 is a diagram of a structure of a temple in a specific embodiment according to an embodiment of this application; and
FIG. 2 is an exploded view of FIG. 1.

### Reference numerals:

1: body;
   11: installation cavity;
   12: sound outlet hole;
   13: cover plate;
   14: first segment;
   15: second segment;
2: moving coil assembly;
3: bone conduction assembly;
   31: piezoelectric sheet;
   32: elastic member.

The accompanying drawings herein are incorporated into this specification and constitute a part of this specification, show embodiments conforming to this application, and are used together with this specification to explain a principle of this application.

### DESCRIPTION OF EMBODIMENTS

To better understand technical solutions of this application, the following describes embodiments of this application in detail with reference to the accompanying drawings.

In a specific embodiment, the following further describes this application in detail with reference to specific embodiments and the accompanying drawings.

Embodiments of this application provide a smart wearable device and a temple of the smart wearable device. The smart wearable device may be a smart wearable device having a speaker function, for example, smart glasses. The smart wearable device may include a rim and temples, and the temples are connected to two ends of the rim.

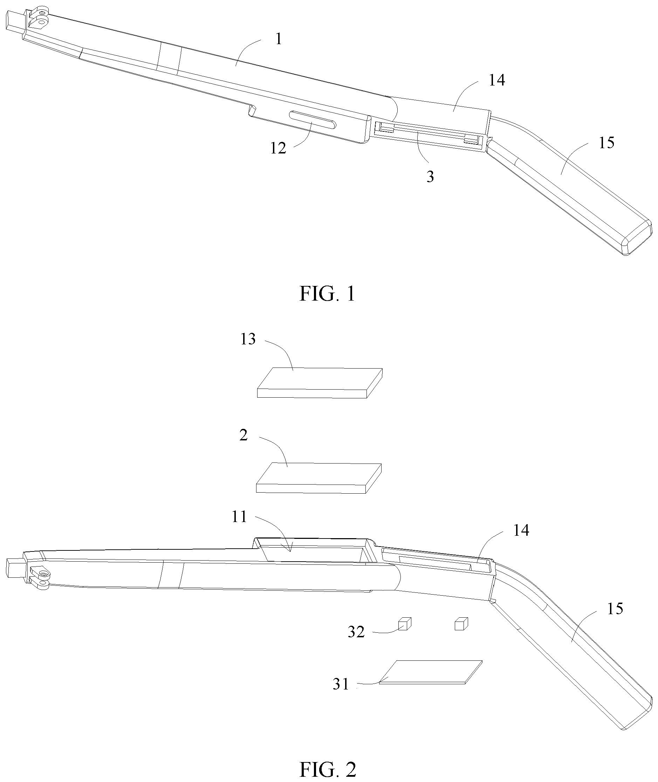

As shown in FIG. 1, the temple includes a body 1 and a sound production apparatus, and the sound production apparatus is installed on the body 1. The sound production apparatus includes a moving coil assembly 2 and a bone conduction assembly 3, and both the moving coil assembly 2 and the bone conduction assembly 3 are configured for sound production.

The moving coil assembly 2 generates a sound wave through vibration of a diaphragm, and the sound wave generated by the moving coil assembly is conducted in air, so that a user hears a sound. The bone conduction assembly 3 can convert an audio electrical signal into a mechanical vibration signal, and conduct the mechanical vibration signal into a cochlea through biological tissue and a bone, so that the user hears the sound. Through bone conduction, many steps of sound wave propagation are omitted, and clear sound reproduction can be implemented in a noisy environment. In addition, less sound wave energy is dissipated in the air. This reduces sound leakage, and improves privacy of a call and audio listening.

However, because the sound wave is conducted in the air, the moving coil assembly 2 has a risk of sound leakage. Because the bone conduction assembly 3 converts an audio signal into a mechanical vibration signal for propagation, a vibration sense is strong, and the user is likely to be uncomfortable during wearing. In this embodiment of this application, the temple includes the moving coil assembly 2 and the bone conduction assembly 3, and is different from a temple that includes only the moving coil assembly 2 in that sound leakage can be reduced, sound quality is improved, and audio listening effect is improved. In addition, the temple this embodiment of this application is different from a temple that includes only the bone conduction assembly 3 in that a vibration sense can be reduced, to improve wearing experience of the user and improve sound quality. Therefore, according to the temple in this embodiment of this application, sound quality of a bone conduction sound production apparatus can be improved when sound leakage is reduced, audio listening effect is improved, and a vibration sense during wearing by the user is reduced, to improve wearing comfort.

In a specific embodiment, when the temple is in a first operating mode, the moving coil assembly 2 can emit a low-frequency sound wave, and the bone conduction assembly 3 can emit a high-frequency sound wave.

The first operating mode may be a mode used by the temple in a quiet environment. In the quiet environment, a risk of sound leakage of the sound production apparatus needs to be reduced as much as possible, to improve privacy of a call and audio listening, and reduce impact on another person in a call process and an audio listening process. In addition, sound leakage of a high-frequency sound wave is more obvious than that of a low-frequency sound wave. Because the bone conduction assembly 3 can effectively reduce sound leakage, in this operating mode, the sound production apparatus may produce a sound by using the bone conduction assembly 3, and the moving coil assembly 2 does not produce a sound, so that a problem of sound leakage during use of the temple in the quiet environment can be resolved. However, because a vibration sense of the bone conduction assembly 3 is strong, wearing comfort of the user is reduced when the bone conduction assembly 3 is used separately.

To resolve the technical problem, in this embodiment, in the first operating mode (the quiet environment), when the bone conduction assembly 3 emits the high-frequency sound wave, the moving coil assembly 2 emits the low-frequency sound wave, so that sound leakage of the high-frequency sound wave can be effectively reduced. Sound leakage of the low-frequency sound wave is not likely to be heard by the outside. Therefore, sound leakage corresponding to a case in which the moving coil assembly 2 emits the low-frequency sound wave is not obvious. In addition, the case in which both the moving coil assembly 2 and the bone conduction assembly 3 produce sounds is different from a case in which the bone conduction assembly 3 produces all sounds in that a vibration sense during wearing by the user can be reduced, and wearing comfort is improved.

Specifically, in the first operating mode, a high-frequency sound wave of the moving coil assembly 2 is filtered by using an equalizer (Equalizer, EQ) or algorithm, and only the low-frequency sound wave is left. In other words, the moving coil assembly 2 can only emit the low-frequency sound wave. In addition, a low-frequency sound wave of the bone conduction assembly 3 is filtered by using an equalizer (Equalizer, EQ) or algorithm, and only the high-frequency sound wave is left. That is, the bone conduction assembly 3 can emit the high-frequency sound wave.

On the other side, when the temple is in a second operating mode, the moving coil assembly 2 can emit a high-frequency sound and a low-frequency sound, and the bone conduction assembly 3 can emit a high-frequency sound and a low-frequency sound.

The second operating mode may be a mode used by the temple in a noisy environment. In the noisy environment, sound leakage is not obvious. Therefore, whether the sound production apparatus leaks a sound is no longer important, provided that it can be ensured that the sound production apparatus has good sound quality and wearing comfort of the user is good. In this case, the moving coil assembly 2 and the bone conduction assembly 3 produce sounds in a full frequency band. In other words, both the moving coil assembly 2 and the bone conduction assembly 3 keep being in an operating state. This case is different from a case in which only the moving coil assembly 2 operates in that sound quality of the sound production apparatus can be improved in the full frequency band, and is different from a case in which only the bone conduction assembly 3 operates in that wearing comfort of the user can be improved.

In conclusion, according to the sound production apparatus in this embodiment of this application, sound quality of the sound production apparatus of the temple and wearing comfort of the temple can be improved through a cooperative operation of the moving coil assembly 2 and the bone conduction assembly 3.

In a specific embodiment, the temple further includes a control apparatus. The control apparatus is configured to control operating statuses of the moving coil assembly 2 and the bone conduction assembly 3. Specifically, when the temple is in the first operating mode, the control apparatus can control the moving coil assembly 2 to emit the low-frequency sound, and control the bone conduction assembly 3 to emit the high-frequency sound. When the temple is in the second operating mode, the control apparatus can control both the moving coil assembly 2 and the bone conduction assembly 3 to emit the low-frequency sound and the high-frequency sound. In other words, the control apparatus can adjust the operating statuses of the bone conduction assembly 3 and the moving coil assembly 2 based on an operating environment in which the temple is located, so that the sound production apparatus can adapt to different environments.

Specifically, the control apparatus may include a first control component and a second control component. The first control component is configured to control the operating status of the moving coil assembly 2, and the second control component is configured to control the operating status of the bone conduction assembly 3. The first control component is configured to control the moving coil assembly 2 to emit only the low-frequency sound in the first operating mode and to be able to emit the low-frequency sound and the high-frequency sound in the second operating mode. The second control component is configured to control the bone conduction assembly 3 to emit only the high-frequency sound in the first operating mode and to be able to emit the low-frequency sound and the high-frequency sound in the second operating mode.

In this embodiment, when the first control component and the second control component respectively control the moving coil assembly 2 and the bone conduction assembly 3, control sensitivity and accuracy can be improved.

The first control component and the second control component may be specifically implemented by using a circuit board. In addition, the temple may further include an electronic element such as a battery or a circuit, and the electronic element is disposed inside the body 1 of the temple.

In addition, the temple may further include an operation portion, at least a part of the operation portion is exposed on an outer side the body 1, and the operation portion is used by the user to control the control apparatus. The operation portion may be a button or a touch key. The operation portion is pressed or touched, so that the operating statuses of the moving coil assembly 2 and the bone conduction assembly 3 can be controlled by using the control apparatus. In this way, the user can switch the operating statuses of the moving coil assembly 2 and the bone conduction assembly 3 based on an environment in which the user is located, so that sound quality of the sound production apparatus of the temple is good in a corresponding environment, and wearing comfort is good.

In the foregoing embodiments, as shown in FIG. 2, the temple includes an installation cavity 11, and the moving coil assembly 2 is installed in the installation cavity 11; and the body 1 is provided with a sound outlet hole 12 communicating with the installation cavity 11, and the sound outlet hole 12 is located on a lower surface of the body 1.

In this embodiment, when the moving coil assembly 2 is located in the installation cavity 11, the installation cavity 11 can protect the moving coil assembly 2. This improves a service life and reliability of the moving coil assembly 2. In addition, air vibration corresponding to a case in which the moving coil assembly 2 operates forms a sound wave in a housing, and the sound outlet hole 12 can lead the sound wave in the housing to the outside of the temple, so that the user can hear the sound wave. When the sound outlet hole 12 is located on the lower surface of the body 1, the sound outlet hole 12 faces and is close to the ear of the user, so that the user can still hear a clear sound when volume is low.

The moving coil assembly 2 may be pasted in the installation cavity 11.

Specifically, as shown in FIG. 2, the temple further includes a cover plate 13 detachably connected to the body 1, and the cover plate 13 and the body 1 enclose the installation cavity 11, so that the moving coil assembly 2 can be conveniently installed in the installation cavity 11.

The cover plate 13 and the sound outlet hole 12 may be disposed opposite to each other. In this case, based on a state during wearing by the user, the cover plate 13 is located on an upper surface of the temple and the sound outlet hole 12 is located on a lower surface of the temple. Alternatively, the sound outlet hole 12 may be provided on the cover plate 13. In this case, both the cover plate 13 and the sound outlet hole 12 are located on the lower surface of the temple.

Certainly, the body 1 and the cover plate 13 may alternatively be fastened together.

On the other side, as shown in FIG. 2, the bone conduction assembly 3 includes a piezoelectric sheet 31 installed on the body 1. An operating principle of the piezoelectric sheet 31 is to convert an audio electrical signal into a mechanical vibration signal. Specifically, the audio electrical signal may be input into a voice coil through electromagnetic action, and the voice coil may be placed in a magnetic field to drive vibration of the voice coil. Alternatively, a transducer apparatus may be made by using a principle of piezoelectric ceramics, to convert an electrical signal into a shape change of a ceramic component to generate vibration. The mechanical vibration signal generated by the piezoelectric sheet 31 can be conducted to a cochlea of the user through biological tissue and a bone of the user, so that the user hears a sound. Bone conduction is different from a sound conduction manner in which a sound wave is generated by using a diaphragm in that many steps of sound wave propagation are omitted, and clear sound reproduction can be implemented in a noisy environment. In addition, less sound wave energy is dissipated in the air. This reduces sound leakage, and improves privacy of a call and audio listening.

The piezoelectric sheet 31 is not installed in an inner cavity of the body 1, but is installed on an outer wall of the body 1. Specifically, when the temple is in a worn state, the piezoelectric sheet 31 is installed on an outer wall at the bottom of the body 1.

As shown in FIG. 1 and FIG. 2, the body 1 of the temple includes a first segment 14 and a second segment 15 bent relative to the first segment 14. The first segment 14 is configured to be placed on soft tissue on an ear of a human body. In this case, the second segment 15 is located behind the ear of the human body. The piezoelectric sheet 31 of the bone conduction assembly 3 is disposed on the first segment 14. In this case, when the temple is in the worn state, the piezoelectric sheet 31 of the bone conduction assembly 3 is located at the soft tissue on the ear of the human body. A case in which mechanical vibration of the piezoelectric sheet 31 is conducted to an auricular cartilage through the soft tissue on the ear in this embodiment of this application is different from a case in which the bone conduction assembly is located behind the ear (a transmission path is that the mechanical vibration is transmitted to a bone after passing through a skin and subcutaneous soft tissue) in that sound quality is good, sound leakage can be further reduced, and an appearance of the user during wearing is improved.

Specifically, an outer side of the piezoelectric sheet 31 is covered with a skin-friendly layer (not shown in the figure), and the skin-friendly layer is configured to be in contact with the human body. When the temple is in the worn state, the piezoelectric sheet 31 of the bone conduction assembly 3 is in contact with soft tissue on the ear of the user through the skin-friendly layer, so that wearing comfort of the user can be improved, and user discomfort caused by vibration of the piezoelectric sheet 31 can be reduced. In addition, the skin-friendly layer can further protect the piezoelectric sheet 31, to improve reliability and a service life of the piezoelectric sheet 31.

The skin-friendly layer may be disposed only on a lower surface of the piezoelectric sheet 31 (based on a case in which the temple is in the worn state), or the skin-friendly layer may cover a surface of the piezoelectric sheet 31, to further improve reliability and a service life of the piezoelectric sheet 31.

A material of the skin-friendly layer is one or more of polyurethane (polyurethane, PU), thermoplastic polyurethane (thermoplastic polyurethane, TPU), rubber, silica gel, polyethylene terephthalate (polyethylene terephthalate, PET), and polyetherimide (polyetherimide, PEI). Therefore, the material of the skin-friendly layer is soft, so that wearing comfort of the user is improved.

On the other side, as shown in FIG. 2, the piezoelectric sheet 31 is elastically connected to the body 1 by using an elastic member 32, so that vibration of the piezoelectric sheet 31 transmitted to the body 1 can be reduced, wearing comfort is improved, and the piezoelectric sheet 31 and the body 1 are protected. This reduces impact of vibration on the piezoelectric sheet 31 and the body 1.

The elastic member 32 may be one or more elastic blocks connected between the piezoelectric sheet 31 and the body 1.

A material of the elastic member 32 is one or more of polyurethane (polyurethane, PU), thermoplastic polyurethane (thermoplastic polyurethane, TPU), rubber, silica gel, polyethylene terephthalate (polyethylene terephthalate, PET), and polyetherimide (polyetherimide, PEI).

In conclusion, the sound production apparatus in this embodiment of this application is different from an existing single dynamic coil speaker in that the bone conduction assembly 3 is added on a basis of the moving coil assembly 2, so that sound leakage can be effectively reduced by using an advantage of little sound leakage of the bone conduction assembly 3, and a high frequency benefit is brought by using a high frequency advantage of the piezoelectric sheet 31, to improve sound quality effect. The sound production apparatus in this embodiment of this application is different from an existing single bone conduction sound production apparatus with a strong vibration sense in that a low frequency band with a strong vibration sense is filtered, so that sound leakage and vibration sense are reduced, to improve wearing comfort of the user. In addition, the sound production apparatus in this embodiment of this application is different from currently common bone conduction sound production apparatuses in which transmission paths all are that a sound/vibration is transmitted to a bone after passing through a skin and subcutaneous soft tissue and consequently sound quality deteriorates in that the bone conduction assembly 3 is attached to the soft tissue on the ear of the user through the skin-friendly layer, and a sound/vibration is conducted to the auricular cartilage through the soft tissue on the ear, to improve sound quality.

It should be noted that a part of this patent application document includes copyright-protected content. A copyright owner reserves the copyright except copies made for the patent document or the recorded content of the patent document in the China National Intellectual Property Administration.

## Claims

1. A temple, wherein the temple comprises:
a body; and
a sound production apparatus, installed on the body, wherein
the sound production apparatus comprises a moving coil assembly and a bone conduction assembly that are configured for sound production.

2. The temple according to claim 1, wherein when the temple is in a first operating mode, the moving coil assembly is configured to emit a low-frequency sound wave, and the bone conduction assembly is configured to emit a high-frequency sound wave.

3. The temple according to claim 2, wherein when the temple is in a second operating mode, the moving coil assembly is configured to emit a high-frequency sound wave and a low-frequency sound wave, and the bone conduction assembly is configured to emit a high-frequency sound wave and a low-frequency sound wave.

4. The temple according to claim 3, wherein the temple further comprises a control apparatus, and the control apparatus is configured to control operating statuses of the moving coil assembly and the bone conduction assembly.

5. The temple according to claim 4, wherein the control apparatus comprises a first control component and a second control component, the first control component is configured to control the operating status of the moving coil assembly, and the second control component is configured to control the operating status of the bone conduction assembly.

6. The temple according to claim 4, wherein the temple comprises an operation portion, at least a part of the operation portion is exposed on an outer side of the body, and the operation portion is used by a user to control the operating statuses of the moving coil assembly and the bone conduction assembly by using the control apparatus.

7. The temple according to any one of claims 1 to 6, wherein the temple comprises an installation cavity, and the moving coil assembly is installed in the installation cavity; and
the body is provided with a sound outlet hole communicating with the installation cavity, and the sound outlet hole is located on a lower surface of the body.

8. The temple according to claim 7, wherein the temple further comprises a cover plate detachably connected to the body, and the cover plate and the body enclose the installation cavity.

9. The temple according to any one of claims 1 to 6, wherein the bone conduction assembly comprises a piezoelectric sheet installed on the body.

10. The temple according to claim 9, wherein the bone conduction assembly further comprises a skin-friendly layer configured to be in contact with a human body, and the skin-friendly layer covers an outer side of the piezoelectric sheet.

11. The temple according to claim 10, wherein a material of the skin-friendly layer is one or more of polyurethane, thermoplastic polyurethane, rubber, silica gel, polyethylene terephthalate, and polyetherimide.

12. The temple according to claim 9, wherein the piezoelectric sheet is elastically connected to the body through an elastic member.

13. The temple according to claim 12, wherein a material of the elastic member is one or more of polyurethane, thermoplastic polyurethane, rubber, silica gel, polyethylene terephthalate, and polyetherimide.

14. The temple according to any one of claims 1 to 6, wherein the body comprises a first segment and a second segment bent relative to the first segment, the bone conduction assembly is disposed on the first segment, and the bone conduction assembly is attached to soft tissue on an ear of a human body.

15. A smart wearable device, wherein the smart wearable device comprises:
a rim; and
a temple, wherein the temple is the temple according to any one of claims 1 to 14; and
the temple is installed on the rim.
